# EUROPÄISCHE PATENTSCHRIFT

(11) **EP 1 604 572 B1**
(45) Veröffentlichungstag und Bekanntmachung des Hinweises auf die Patenterteilung: **20.12.2006**
(21) Anmeldenummer: 05011555.9
(22) Anmeldetag: 28.05.2005
(51) Int. Cl.: A22C 11/00, A22C 13/00, A23G 3/28

(54) **Verfahren zum Kennzeichnen von geräucherten Lebensmitteln**
Method for marking smoked foodstuff
Procédé de marquage d'un produit alimentaire fumé

(30) Priorität: 09.06.2004 DE 102004027901; 07.01.2005 DE 102005000953
(43) Veröffentlichungstag der Anmeldung: 14.12.2005
(73) Patentinhaber: Wiedenmann, Eberhard, 04275 Leipzig (DE)
(72) Erfinder: Wiedenmann, Eberhard, 04275 Leipzig (DE)
(74) Vertreter: Dieterle, Johannes

(56) Entgegenhaltungen:
- EP-A- 0 941 663
- WO-A-20/04045857
- DE-A1- 3 836 821
- DE-A1- 19 646 813
- NL-A- 9 402 168
- US-A- 5 821 497

## Beschreibung

Die Erfindung betrifft ein Verfahren zum Kennzeichnen von geräucherten Lebensmitteln, insbesondere von geräucherten Fleischwaren, mit welchem deutlich erkennbare Beschriftungen oder andere Kennzeichnungen unmittelbar auf der Oberfläche dieser Lebensmittel abgebildet werden können.

Aus der deutschen Offenlegungsschrift DE 199 51 614 A1 ist ein Verfahren zur Kennzeichnung von Würsten bekannt, bei welchem vor dem Räuchern die zu kennzeichnende Oberfläche mit einer Schablone, die das aufzubringende Kennzeichen abbildet, abgedeckt wird. Nach dem Räuchern wird die Schablone entfernt, und das Kennzeichen hebt sich als nichtgeräucherte (hellere) Fläche gegenüber der geräucherten (dunkleren) Gesamtfläche der Wurst ab.

Zwar ist es mit diesem Verfahren möglich, deutlich erkennbare Kennzeichnungen unmittelbar auf der Wurst abzubilden, jedoch ist das Verfahren, welches die Herstellung und Bereithaltung der Schablonen, deren Anbringung vor dem Räuchern und deren Entfernung nach dem Räuchern erfordert, sehr kosten- und arbeitsaufwendig. Auch ist das Verfahren nur geeignet, um immer wieder dieselben Kennzeichnungen aufzubringen, weil jede Änderung der Kennzeichnung unvermeidlich mit der Neuanfertigung entsprechender Schablonen verbunden ist.

Aus dem Patent DE 3 836 821 C3 ist ferner ein Verfahren und eine Vorrichtung zum Versehen von Lebensmitteln mit einer Oberflächenkennzeichnung, vorzugsweise für Käse bekannt, welche die gebündelte Wärmeenergie eines Laserstrahles nutzen, um unter Zwischenschaltung einer Schablone in geringer Entfernung von der Oberfläche des zu kennzeichnenden Lebensmittels, z. B. in die mit Mehl präparierte Wachshülle eines Käses eine Kennzeichnung einzubrennen. Das bekannte Verfahren hat den Nachteil, dass die Kennzeichnung relativ grob erscheint, weil sie durch Verbrennungsrückstände der Mehlpartikel und das reliefartige plastische Aufschmelzen der Wachshülle gebildet wird. Das Verfahren ist dadurch zum Kennzeichnen z. B. von Würsten mit zarter Außenhaut völlig ungeeignet. Ein solcher Einbrennvorgang würde die zarte Außenhaut z. B. von Wiener Würstchen oder Bockwürsten in einem Maße verletzen, dass die Würste spätestens bei der Erwärmung im Wasserbad aufplatzen und unbrauchbar würden.

Der Erfindung liegt daher die Aufgabe zugrunde, ein Verfahren zur Kennzeichnung von geräucherten Lebensmittels zu entwickeln, welches gegenüber den bekannten Verfahren weniger aufwendig ist, mit welchem eine variable beliebig wechselnde Kennzeichnung vorgenommen werden kann, und welches die Oberfläche der zu kennzeichnenden Produkte funktionell nicht beeinträchtigt.

Die Aufgabe wird durch die kennzeichnenden Merkmale des Patentanspruches 1 gelöst.

Vorteilhafte Ausgestaltungen des Verfahrens bilden die Merkmale der Unteransprüche 2 bis 10.

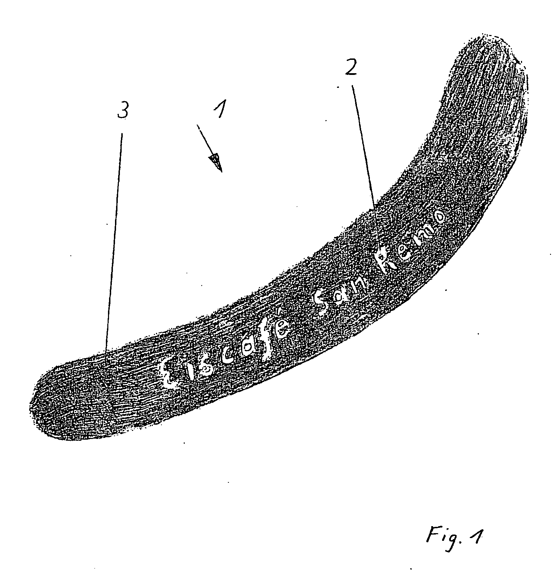

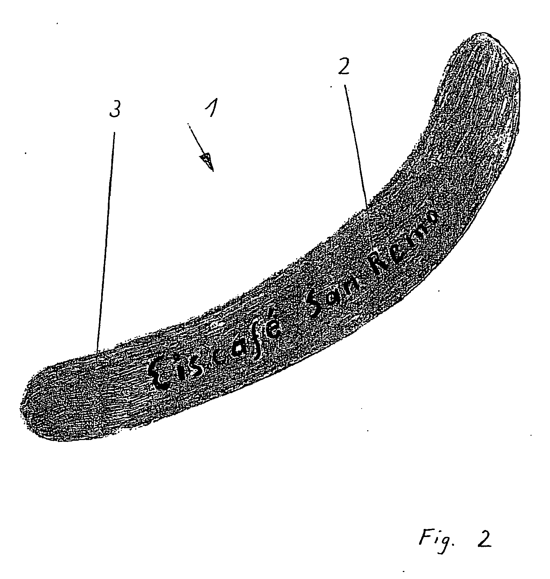

Die Erfindung soll nachfolgend anhand eines bevorzugten Ausführungsbeispieles unter Bezugnahme auf die Figuren 1 und 2 näher erläutert werden.
- Fig. 1: zeigt eine Bockwurst als Beispiel für ein zu kennzeichnendes geräuchertes Lebensmittel in Seitenansicht mit einer erfindungsgemäßen Kennzeichnung, die durch eine erste Ausführungsform des erfindungsgemäßen Verfahrens gekennzeichnet wurde.
- Fig. 2: zeigt eine Bockwurst in Seitenansicht, die durch eine zweite Ausführungsform des erfindungsgemäßen Verfahrens gekennzeichnet wurde.

Die in Figur 1 dargestellte Bockwurst 1 wird in üblicher Weise geräuchert, wodurch auf der Außenseite des Darmes 3 eine sehr dünne, am Darm 3 fest haftende dunkler gefärbte Räucherschicht ausgebildet wird, die der Wurst ein appetitliches Aussehen und den charakteristischen Wohlgeschmack verleiht.

Erfindungsgemäß wird diese sehr dünne Räucherschicht in einer ersten Ausführungsform des erfindungsgemäßen Verfahrens durch kurzfristige Einwirkung eines Laserstrahles an den zu kennzeichnenden Stellen programmgesteuert abgetragen, ohne den Darm selbst merkbar zu verletzen. Für die Dauer der Einwirkung des Laserstrahles wird die Wurst von einer nicht dargestellten Halteeinrichtung erfasst und mit dem zu kennzeichnenden Oberflächenabschnitt in einer vorbestimmten Ebene gehalten. Der Laserstrahl wird durch eine ebenfalls nicht dargestellte Führungseinrichtung in der vorbestimmten Ebene über den zu kennzeichnenden Oberflächenabschnitt bewegt und trägt mit relativ geringer Energie nur die durch das Räuchern dunkler gefärbten Partikel der sehr dünnen Räucherschicht an der Außenseite des Darmes 3 ab, so dass im Muster der Bewegung des Laserstrahles der unter der dunklen Räucherschicht vorhandene hellere Darm sichtbar wird. Der Darm wird funktionell vom Laserstrahl nicht beeinträchtigt. Die Würste können in gewohnter Weise im Wasserbad erhitzt werden, ohne dass sie aufplatzen und unbrauchbar werden.

Bei einer zweiten Ausführungsform des erfindungsgemäßen Verfahrens wird die Bockwurst 1 in gleicher Weise gehalten, und durch eine noch geringere Energie des Laserstrahles als bei der ersten Ausführungsform werden die durch das Räuchern dunkler gefärbten Partikel der an der Außenseite des Darms befindlichen Räucherschicht durch die Energie des Laserstrahles noch dunkler gefärbt. Nach dieser Einwirkung des im Muster der Kennzeichnung geführten Laserstrahles auf die Partikel der Räucherschicht hebt sich die deutlich dunkler gefärbte Kennzeichnung von der übrigen Räucherschicht gut sichtbar ab.

Durch Aufbringen eines lebensmittelechten, geschmacksneutralen und wasserlöslichen Kontrastmittels auf die Außenfläche des Lebensmittels vor oder nach dem Räuchern kann der Verfärbungseffekt durch die Einwirkung des Laserstrahles noch verstärkt werden. Bei Würsten, die im Wasserbad erhitzt werden, löst sich das wasserlösliche Kontrastmittel im Wasserbad.

Die Bewegung des Laserstrahles erfolgt in beiden Ausführungsformen programmgesteuert. Dies geschieht z. B. durch Eingabe und Speicherung von bestimmten Mustern wie Zeichnungen oder Beschriftungen in den Speicher eines Computers, wobei mit den im Computer gespeicherten Informationen die Bewegungen des Laserstrahles dann auf Abruf in der vorbestimmten Ebene über den Oberflächenabschnitt 1 geführt werden und die Räucherschicht im Muster der gespeicherten Informationen abgetragen bzw."nachgedunkelt" wird. Schließlich ist es auch möglich, in einem Arbeitsgang wechselweise abzutragen und nachzudunkeln und somit zweifarbige Muster aufzubringen.

Durch das programmgesteuerte Aufbringen der Kennzeichnungen ist es möglich, die geräucherten Lebensmittel wie z. B. die in den Figuren 1 und 2 dargestellten Bockwürste 1 problemlos mit den verschiedensten Bildern oder Beschriftungen, auch im ständigen Wechsel mit anderen und immer wieder neuen Kennzeichnungen zu versehen. So können nicht nur Werbekennzeichnungen, wie sie in den Figuren 1 und 2 dargestellt sind, aufgebracht werden, sondern auch spezielle Gästewünsche z. B. nach Aufbringen von Namen oder Grüßen oder von Tier- oder Märchenbildern für Kinder usw. in Minutenschnelle und ganz individuell erfüllt werden.

Die Eingabe der Kennzeichnungen in den Computer erfolgt über Eingabegeräte wie Tastaturen, Scanner, Grafiktabletts, Lichtstifte usw. und kann auch per Fernübertragung vorgenommen werden.

Das Erfassen der Lebensmittel durch die Halteeinrichtung und die Anordnung des zu kennzeichnenden Oberflächenabschnittes in der vorbestimmten Ebene erfolgt bevorzugt automatisch. Da die geräucherten Lebensmittel als Naturprodukte keine ideale Geometrie aufweisen (z. B. sind die Würste 1, wie die Figuren 1 und 2 zeigen, mehr oder weniger gekrümmt) und im Raum keine exakt ebene Oberfläche bilden, kann der Laserstrahl in vorteilhafter Weise durch Sensoren gesteuert und entlang der zu kennzeichnenden Flächen nachgeführt werden, während die Wirkungsebene des Laserstrahles durch Autofokus exakt bestimmt und gesteuert werden kann.

Für das erfindungsgemäße Verfahren sind keine material- und arbeitsintensiven Schablonen erforderlich, mit welchen bisher nur bestimmte Kennzeichnungen aufgebracht werden konnten.

Im Gegensatz zu den bekannten Kennzeichnungsverfahren, bei welchen die Kennzeichnung durch Einbrennen unter Verformung und Verletzung der Oberfläche des Lebensmittels mittels Laserstrahlen erreicht wurde, ist es mit dem erfindungsgemäßen Verfahren möglich, auch sehr empfindliche Lebensmittel wie z. B. zarte Naturdarm-Wursthüllen zu kennzeichnen, die bei Anwendung des bekannten Laserverfahrens unweigerlich Schaden nehmen und unbrauchbar würden.

Das erfindungsgemäße Verfahren ist durch die Möglichkeit der elektronischen Eingabe und Speicherung des aufzubringenden Kennzeichens und durch die automatische und programmgesteuerte Führung des Laserstrahles auf dem zu kennzeichnenden Flächenabschnitt des Lebensmittels äußerst variabel einsetzbar, so dass die verschiedensten Kennzeichnungen innerhalb kürzester Zeit auf die geräucherten Flächen der Lebensmittel aufgebracht werden können.

## Patentansprüche

1. Verfahren zum Kennzeichnen von geräucherten Lebensmitteln (1) unter Anwendung eines Laserstrahles, der programmgesteuert dem Muster des abzubildenden Kennzeichens folgend auf der Oberfläche des geräucherten Lebensmittels entlanggeführt wird,
**dadurch gekennzeichnet, dass**
der Laserstrahl nur auf die an der Oberfläche des Lebensmittels angelagerten farbgebenden Räucherpartikel im Muster des abzubildenden Kennzeichens einwirkt, ohne die Oberfläche selbst merkbar anzugreifen.

2. Verfahren nach Anspruch 1,
**dadurch gekennzeichnet, dass**
der Laserstrahl die auf der Oberfläche des Lebensmittels angelagerten farbgebenden Räucherpartikel im Muster des abzubildenden Kennzeichens entfernt.

3. Verfahren nach Anspruch 1,
**dadurch gekennzeichnet, dass**
der Laserstrahl die an der Oberfläche des Lebensmittels angelagerten farbgebenden Räucherpartikel nachdunkelt.

4. Verfahren nach Anspruch 1,
**dadurch gekennzeichnet, dass**
der Laserstrahl die an der Oberfläche des Lebensmittels angelagerten farbgebenden Räucherpartikel im Muster des abzubildenden Kennzeichens teilweise entfernt und teilweise nachdunkelt und somit ein zweifarbiges Kennzeichen aufbringt.

5. Verfahren nach mindestens einem der vorhergehenden Ansprüche,
**dadurch gekennzeichnet, dass**
auf die Oberfläche des Lebensmittels vor oder nach dem Räuchern ein lebensmittelechtes, geschmacksneutrales und wasserlösliches Kontrastmittel aufgebracht wird.

6. Verfahren nach mindestens einem der vorhergehenden Ansprüche,
**dadurch gekennzeichnet, dass**
das zu kennzeichnende Lebensmittel durch eine Halteeinrichtung erfasst und mit dem zu kennzeichnenden Oberflächenabschnitt in einer vorbestimmten Ebene gehalten wird.

7. Verfahren nach mindestens einem der vorhergehenden Ansprüche,
**dadurch gekennzeichnet, dass**
der zu kennzeichnende Flächenabschnitt des geräucherten Lebensmittels durch Sensoren erfasst und die Bewegung des Lasterstrahles in diesem Flächenabschnitt nachgeführt wird.

8. Verfahren nach mindestens einem der vorhergehenden Ansprüche,
**dadurch gekennzeichnet, dass**
die Wirkungsebene des Laserstrahles auf dem geräucherten Lebensmittel durch Autofokus erfasst und eingestellt wird.

9. Verfahren nach mindestens einem der vorhergehenden Ansprüche,
**dadurch gekennzeichnet, dass**
die abzubildenden Kennzeichen in einen Computer eingegeben, gespeichert und zur Steuerung des Laserstrahles abgerufen werden.

10. Verfahren nach Anspruch 8,
**dadurch gekennzeichnet, dass**
die Eingabe der Kennzeichnungen über Eingabegeräte wie Tastaturen, Scanner, Grafiktabletts, Lichtstifte usw. vorgenommen wird.

11. Verfahren nach Anspruch 8 und/oder 9,
**dadurch gekennzeichnet, dass**
die Eingabe in den Computer per Fernübertragung erfolgt.

## Claims

1. Method of marking smoked food products (1) using a laser beam that is guided under programmed control on the surface of the smoked food product such that the beam traces the pattern of the mark to be reproduced,
**characterised in that** the laser beam acts only on the colour-conferring smoked particles located at the surface of the food product, in the pattern of the mark to be reproduced, without perceptibly attacking the surface itself.

2. Method according to claim 1,
**characterised in that** the laser beam removes the colour-conferring smoked particles located on the surface of the food product according to the pattern of the mark to be reproduced.

3. Method according to claim 1,
**characterised in that** the laser beam darkens the colour-conferring smoked particles located at the surface of the food product.

4. Method according to claim 1,
**characterised in that** the laser beam partially removes and partially darkens the colour-conferring smoked particles located at the surface of the food product according to the pattern of the mark to be reproduced, thus generating a two-tone mark.

5. Method according to at least one of the preceding claims,
**characterised in that** a tasteless and water-soluble food-grade contrast medium is applied to the surface of the food product either before or after smoking.

6. Method according to at least one of the preceding claims,
**characterised in that** the food product to be marked is grasped by a holding means and held with the surface section to be marked in a predetermined plane.

7. Method according to at least one of the preceding claims,
**characterised in that** the section of the smoked food product's surface that is to be marked is registered by sensors and the laser beam moved such that it tracks this surface section.

8. Method according to at least one of the preceding claims,
**characterised in that** the laser beam's action plane on the smoked food product is determined and adjusted by autofocus.

9. Method according to at least one of the preceding claims,
**characterised in that** the marks to be reproduced are entered and stored in a computer, and are called up to control the laser beam.

10. Method according to claim 8,
**characterised in that** the marks are entered by way of input devices such as keyboards, scanners, graphic tablets, light pens, etc.

11. Method according to claim 8 and/or 9,
**characterised in that** the marks are entered into the computer by way of tele-transmission.

## Revendications

1. Procédé de marquage de produits alimentaires fumés (1) en utilisant un rayon laser, qui, commandé par un programme, est guidé le long du modèle du marquage à reproduire en suivant la surface du produit alimentaire fumé,
**caractérisé en ce que** le rayon laser agit seulement sur les particules de fumage colorantes, déposées sur la surface du produit alimentaire, dans le modèle du marquage à reproduire, sans attaquer de manière perceptible la surface elle-même.

2. Procédé selon la revendication 1,
**caractérisé en ce que** le rayon laser enlève les particules de fumage colorantes, déposées sur la surface du produit alimentaire, dans le modèle du marquage à reproduire.

3. Procédé selon la revendication 1,
**caractérisé en ce que** le rayon laser assombrit les particules de fumage colorantes, déposées sur la surface du produit alimentaire.

4. Procédé selon la revendication 1,
**caractérisé en ce que** le rayon laser enlève partiellement et assombrit partiellement les particules de fumage colorantes, déposées sur la surface du produit alimentaire, dans le modèle du marquage à reproduire et fournit donc un marquage bicolore.

5. Procédé selon au moins l'une des revendications précédentes,
**caractérisé en ce que** à la surface du produit alimentaire, avant ou après le fumage, un agent de contraste acceptable pour les produits alimentaires, mettre au goût et hydrosoluble, est déposé.

6. Procédé selon au moins l'une des revendications précédentes,
**caractérisé en ce que** le produit alimentaire à marquer est saisi par un dispositif de support et est maintenu dans un plan prédéterminé avec la section des surfaces à marquer.

7. Procédé selon au moins l'une des revendications précédentes,
**caractérisé en ce que** la section de surface à marquer du produit alimentaire fumé est déterminée par des capteurs et le mouvement du rayon laser est guidé ensuite dans cette section de surface.

8. Procédé selon au moins l'une des revendications précédentes,
**caractérisé en ce que** le plan d'action du rayon laser sur le produit alimentaire fumé est déterminé par autofocus et ajusté.

9. Procédé selon au moins l'une des revendications précédentes,
**caractérisé en ce que** les marquages à reproduire sont entrés dans un ordinateur, enregistrés et rappelés pour la commande du rayon laser.

10. Procédé selon la revendication 8,
**caractérisé en ce que** l'entrée des marquages est effectuée par le biais de terminaux comme des claviers, des scanners, des tablettes graphiques, des crayons lumineux etc.

11. Procédé selon la revendication 8 et/ou 9,
**caractérisé en ce que** l'entrée dans l'ordinateur a lieu par télétransmission.
